# EUROPEAN PATENT SPECIFICATION

(11) **EP 0 325 488 B1**
(45) Date of publication and mention of the grant of the patent: **24.03.1993**
(21) Application number: 89300569.4
(22) Date of filing: 20.01.1989
(51) Int. Cl.: G11B 13/04, G11B 7/00

(54) **Analog signal switching device for use in an optical memory device**
Analogsignalschaltvorrichtung für ein optisches Speichergerät
Dispositif pour l'allumage d'un signal analogue à utiliser dans un système de mémorisation optique

(30) Priority: 22.01.1988 JP 13196/88
(43) Date of publication of application: 26.07.1989
(73) Proprietor: SHARP KABUSHIKI KAISHA, Osaka 545 (JP)
(72) Inventor: Fuji, Hiroshi, Kitakatsuragi-gun Nara-ken (JP); Maeda, Shigemi, Yamatokoriyama-shi Nara-ken (JP); Yamaguchi, Takeshi, Nara-shi Nara-ken (JP); Kojima, Kunio, Nara-shi Nara-ken (JP); Deguchi, Toshihisa, Nara-shi Nara-ken (JP); Terashima, Shigeo, Tenri-shi Nara-ken (JP)
(74) Representative: Brown, Kenneth Richard

(56) References cited:
- EP-A- 0 174 822
- EP-A- 0 220 023
- EP-A- 0 232 867
- EP-A- 0 246 830

## Description

The present invention relates to analog signal switching devices for use in optical memory devices which record, playback, and erase information by irradiating the optical data storage medium with a light beam.

Conventionally, optical memory devices include a magneto-optical memory device which records information on a magneto-optical disk. An anisotropic magnetic thin film with an axis of easy magnetization in a direction perpendicular to the film surface is formed on the magneto-optical disk used in the magneto-optical memory device. This enables information to be recorded as a magnetic orientation in a large number of minute areas.

To record information on a magneto-optical disk of this type, the magnetic thin film is irradiated with a focused laser beam with a diameter of, for example, approximately 1 micrometer. This raises the local temperature of that part of the thin film irradiated by the laser beam dropping the coercive force and allowing the magnetic orientation of the film to be changed more easily. It is possible, therefore, to record or erase information at a point of raised local temperature by changing the magnetic orientation to the desired orientation by, for example, applying an external magnetic field to reverse the magnetic orientation.

To play back the information recorded in the manner described above, the magnetic film is irradiated with a laser beam having a strength which will not cause the temperature to rise to the level necessary to allow the magnetic orientation to be changed easily. The plane of polarization of the linear polarized light in the transmitted and reflected laser beam is rotated by the Faraday effect and the Kerr effect on incidence with the magnetic thin film. By detecting the transmitted and reflected light using an analyzer, and converting it into an electrical signal with an optical sensor, a pulse-type playback signal is obtained.

As well as receiving the weak laser light during playback, the optical sensor also receives strong laser light transmitted and reflected by the magnetic thin film during data recording or erasing. Because the laser beam emitted during recording or erasing is stronger than that used during playback, the optical sensor outputs an excessively high level signal. When this is input to a playback analog circuit connected to the optical sensor, the signal greatly exceeds the dynamic range, and affects subsequent playback operation.

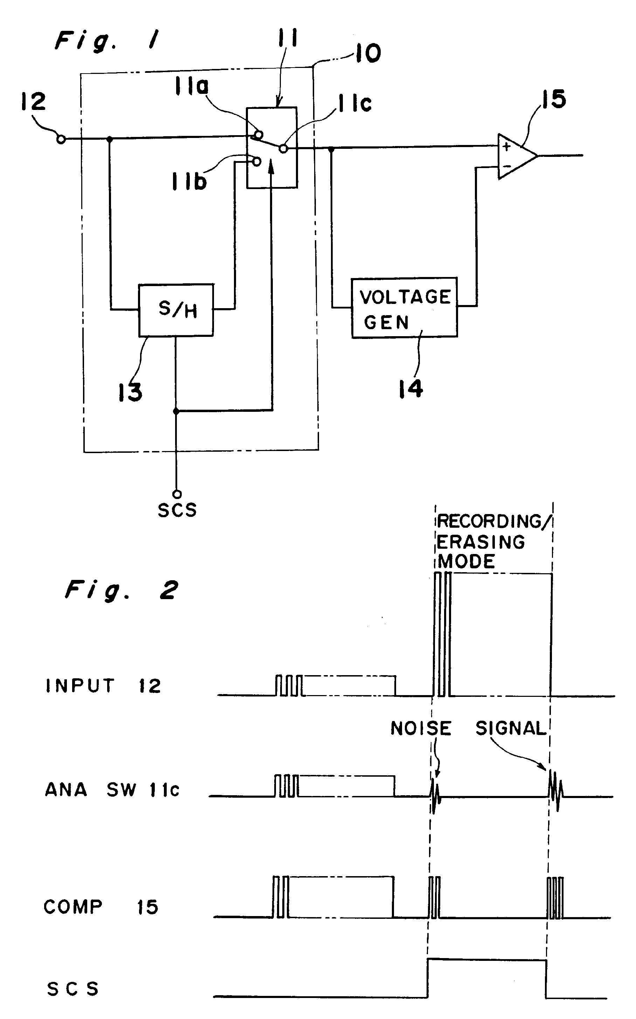

Accordingly, an analog signal switching device 10 as shown in Fig. 1 has conventionally been used. Specifically, the analog signal switching device 10 is constructed so that the input terminal 12 is connected to terminal 11a directly on one side of analog switch 11, and also through a sample hold circuit 13 to the other terminal 11b.

The analog switch 11 is constructed so that the terminal 11a is connected to the terminal 11c when the switch control signal SCS is low and to the terminal 11c when the switch control signal SCS is high. The sample hold circuit 13 is arranged so as to enter a sampling state and to output the unmodified signal sent from input terminal 12 when the switch control signal SCS is low, and to enter a hold state to hold and output the signal sent from the input terminal 12 immediately before the switch control signal SCS becomes high.

As shown in Fig. 2, by using this type of analog signal switching device 10, when the switch control signal SCS goes high during input of an excessively high level signal from input terminal 12, i.e. a signal several times the playback signal level, which will occur during information recording or erasing, the analog switch 11 provides a signal to the terminal 11c from which the excessively high level signal has been removed.

As a result, the voltage generator 14 and comparator 15 connected to the analog switch 11 operate normally, and a binary converted playback digital signal is output.

However, in the above described analog signal switching device 10, although it is possible to remove the excessively high level signal, switching noise signals tend to be generated during the switching operation. Noise signals of this type result in the noise signal often remaining as a noise pulse even after the binary converted playback digital signal is generated by the voltage generator 14 and comparator 15, thus causing improper operation of digital signal processing circuits, such as demodulation and PLL (phase locked loop) circuits, thus reducing the reliability of the optical memory device.

The present invention has been developed with a view to substantially solving the above described disadvantages and aims to provide an improved analog signal switching device for use in optical memory devices in which the switching noise signal can be eliminated.

In accordance with the present invention there is provided a signal switching device for use in an optical memory device having a main signal input an analog switch which is selectively operable to connect at least one input thereof to a switch output thereof in accordance with the state of a switch signal (SCS) **characterised in that** the signal switching device further comprises:
a mask signal generator for generating a mask signal which is present during operation of the analog switch; and
gate means responsive to the mask signal for connecting the switch output and a signal output of the device in the absence of the mask signal and inhibiting connection in the presence of the masking signal, whereby noise signals produced during operation of the analog switch is substantially eliminated.

According to the aforementioned construction, when the analog switch switches, the mask signal generator generates a mask signal for at least the period in which switching noise is generated by the switching operation. This mask signal masks the signal output by the analog switch by, for example, a gate circuit, and stops or resets the demodulation circuit or PLL circuit connected to the analog switching device.

Because it is possible to prevent misoperation of a digital signal processing circuit, etc., due to switching noise the reliability of the optical memory device is improved.

These and other objects and features of the present invention will become apparent from the following description taken in conjunction with a preferred embodiment thereof with reference to the accompanying drawings, throughout which like parts are designated by like reference numerals, and in which:
Fig. 1 is a block diagram of a conventional analog switching device;
Fig. 2 is a graph showing waveforms of signals obtained at various parts of the analog switching device of Fig. 1;
Fig. 3 is a block diagram of an analog switching device according to the present invention;
Fig. 4 is a circuit diagram of the sample hold circuit used in the circuit of Fig. 3;
Figs. 5, 6 and 7 are circuit diagrams showing different embodiments of the mask generation circuit used in the circuit of Fig. 3;
Fig. 8 is a circuit diagram of the gate circuit used in the circuit of Fig. 3; and
Fig. 9 is a graph showing waveforms of signals obtained at various parts of the analog switching device of Fig. 1.

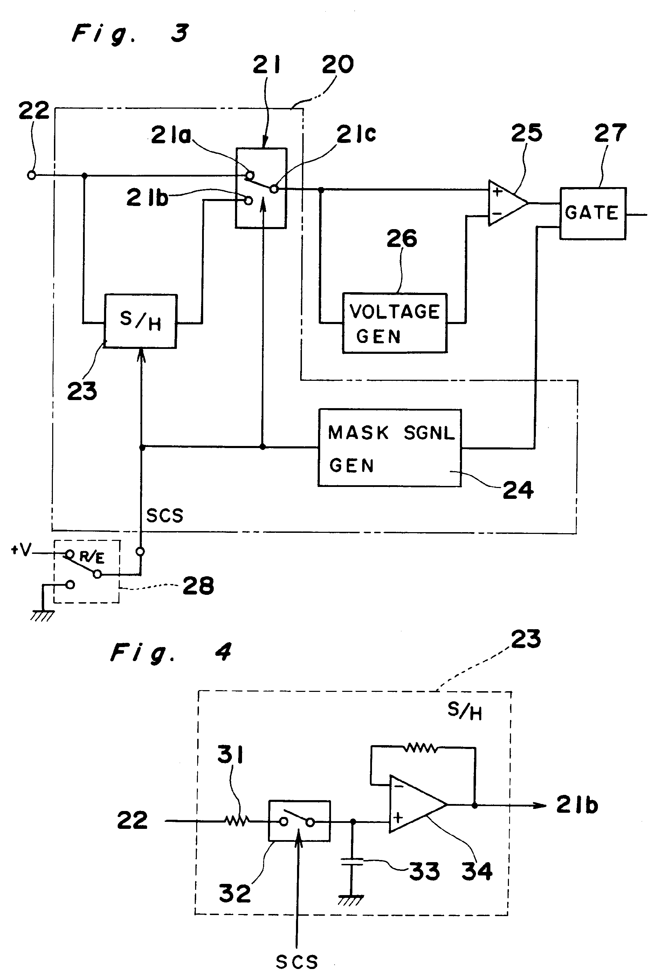

Referring to Fig. 3, an analog signal switching device 20 for optical memory devices is shown which includes an analog switch 21, a sample hold circuit 23 and a mask signal generator 24. An input terminal 22 is directly connected to terminal 21a of analog switch 21, and indirectly to another terminal 21b of analog switch 21 through a sample hold circuit 23.

The analog switch 21 is operated by a switch control signal SCS produced from a switch control signal generator 28. The switch 21 operates so that generator 28 is set to produce a HIGH level SCS signal (see Fig. 3) when the optical memory device employing switching device 20 is set to a mode for recording or erasing, and a LOW level SCS signal when the optical memory device is set to a mode other than the recording and erasing modes. When SCS is HIGH, i.e., during the recording or erasing mode, terminal 21b is connected to terminal 21c, and when SCS is LOW terminal 21a is connected to terminal 21c. The switch control signal SCS is also used in the sample hold circuit 23 and in the mask signal generator 24, as described below.

As shown in Fig. 4, the sample hold circuit 23 includes an analog switch 32 for receiving the signal from input terminal 22 through a resistor 31, a capacitor 33 for holding the input signal when the analog switch 32 is open, and a buffer 34. the LOW and HIGH levels respectively turn the switch control signal SCCH analog switch 32 on and off. Accordingly, when the optical memory device is in the recording or erasing mode, the analog switch 32 opens so that capacitor 33 holds a signal immediately before the opening of analog switch 32. Thus, during the recording or erasing mode, sample hold circuit 23 produces a constant signal held in capacitor 33, and during a mode other than the recording and erasing mode, sample hold circuit 23 produces a signal relative to the signal obtained from input terminal 22.

Referring to Fig. 5 a mask signal generator 24-1 according to one preferred embodiment is shown. The mask signal generator 24-1 includes a monostable multivibrator 41, a NOR gate 44, a low pass filter 45 and an inverter 46. One input A of multivibrator 41 receives the signals SCS and the other input B thereof receives a constant voltage signal. The Q output of multivibrator 41 is connected to one input of the NOR gate 44. The other input of the NOR gate 44 receives the signal SCS. AN output of the NOR gate 44 is applied to the inverter 46 through the low pass filter 45 to produce a mask signal.

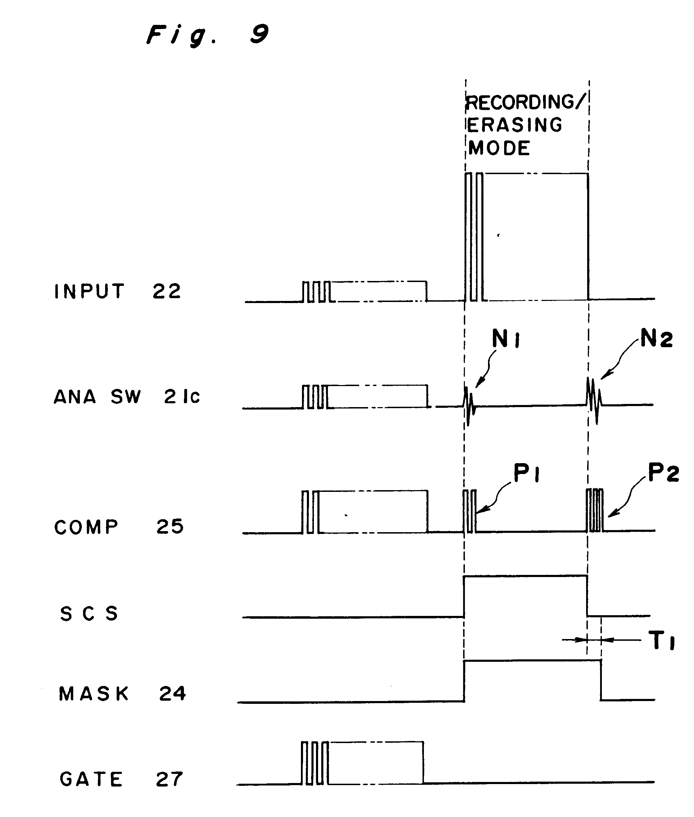

The mask signal generator 24-1 operates such that in response to the leading edge of the switch control signal SCS, the NOR gate 44 produces a LOW level signal which is filtered in the low pass filter 45 and inverted to a HIGH level signal by the inverter 46. Thereafter, in response to the trailing edge of the switch control signal SCS, the multivibrator 41 is activated to produce a pulse having a pulse width T1. T1 is determined by the resistor 42 and the capacitor 43 coupled to the multivibrator 41. The pulse produced from the multivibrator 41 is applied to the NOR gate 44. Accordingly, when the switch control signal SCS goes LOW, the output from the NOR gate 44 remains LOW for time T1. Although some overshoot or preshoot ripples may appear at the trailing edge and/or leading edge of the switch control signal SCS, these ripples can be eliminated by the low pass filter 45. The inverter 46 produces a HIGH level signal, which is used as a mask signal, that begins in response to the leading edge of the switch control signal SCS and continues until a period T1 after the trailing edge of the signal SCS, as shown in Fig. 9.

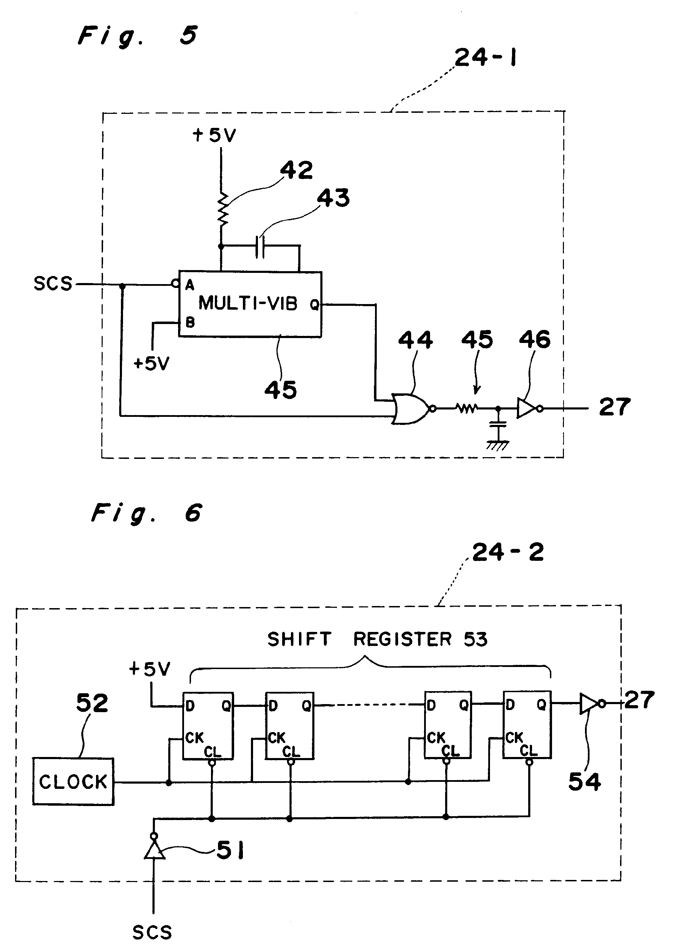

Referring to Fig. 6 a mask signal generator 24-2 according to another preferred embodiment is shown. Mask signal generator 24-2 includes an inverter 51 for receiving the switch control signal SCS, a clock generator 52, an N-bit shift register 53 defined by a plurality of flip-flops, and an inverter 54.

The mask signal generator 24-2 operates such that in response to the leading edge of the switch control signal SCS, the inverter 51 produces a LOW level signal which clears the N-bit shift register 53. The shift register 53 is maintained in the cleared condition for the whole time that the LOW level signal from the inverter 51 is provided to the shift register 53. Thus, when the signal from inverter 51 is LOW, i.e., when the SC signal is HIGH, the last flip-flop, as well as the others in the shift register 53 produced a LOW level signal from its Q terminal, and a LOW level signal is applied to the inverter 54 from the output terminal Q of the last flip-flop. Thereafter, when the switch control signal SCS goes LOW, the inverter 51 produces a HIGH level signal to activate the shift register 53. The LOW level signal carried by each flip-flop is shifted towards the inverter 54 in response to each clock from the clock generator 52 and, at the same time, a HIGH level signal applied to the input terminal D of the shift register is sequentially shifted towards the inverter 54. Even after the switch control signal SCS has changed from HIGH to LOW, the last flip-flop in the shift register 53 continues to produce a LOW level signal for a time T1, i.e., until the HIGH level signal from the input terminal D of the shift register 53 is shifted to the output terminal Q. Accordingly, the inverter 54 produces a HIGH level signal, which is used as a mask signal that begins in response to the leading edge of the switch control signal SCS and continues for a time T1 after the trailing edge of the signal SCS, as shown in Fig. 9.

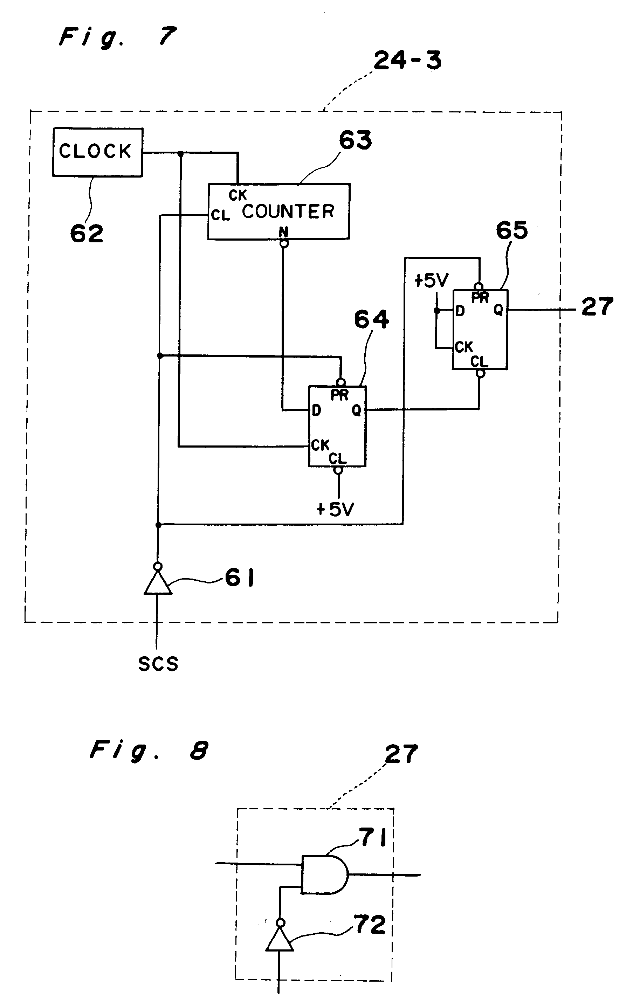

Referring to Fig. 7 a mask signal generator 24-3 according to a further preferred embodiment is shown. Mask signal generator 24-3 includes an inverter 61 for receiving the switch control signal SCS, a clock generator 62, an N-bit counter 63, and flip-flops 64 and 65.

The mask signal generator 24-3 operates such that in response to the leading edge of the switch control signal SCS, the inverter 61 produces a LOW level signal which clears the N-bit counter 63 and, at the same time, presets the flip-flops 64 and 65. Thus, the Q terminal of the flip-flops 64 and 65 produces a HIGH level signal. Thereafter, when the switch control signal SCS is changed to LOW, the inverter 51 produces a HIGH level signal for activating the counter 63 to start counting clock pulses from the clock generator 62. When the counter 63 counts N clock pulses corresponding to a time T1, it produces a negative going pulse to the D terminal of the flip-flop 64, and in turn, the Q terminal of the flip-flop 64 produces a negative going pulse for clearing the flip-flop 65. Thus, the flip-flop 65 changes its output from HIGH to LOW. Thus, even after the change of the switch control signal SCS from HIGH to LOW, the flip-flop 65 continues to produce a HIGH level signal from its Q terminal for a further time T1, i.e., until the counter 63 counts N clock pulses. Accordingly, the flip-flop 65 produces a HIGH level signal from its Q terminal which is used as a mask signal that begins in response to the leading edge of the switch control signal SCS and continues for an extra time T1 beyond the trailing edge of the signal SCS, as shown in Fig. 9.

In general, the mask signal generator 24 generates a mask signal when the switch control signal SCS is HIGH until a specified time T1 has elapsed after the signal SCS becomes low. That is, at least for the period during which switching noise is generated by the switching operation of the analog switch 21.

Referring back to Fig. 3, the terminal 21c of analog switch 21 is connected to a non-inverting input of the comparator 25, and is also connected through the voltage generator 26 to an inverting input of the comparator 25. Output signals from the comparator 25 and the mask signal generator 24 are applied to a gate circuit 27 defined, as shown in Fig. 8, by an AND gate 71 and an inverter.

In operation, during a mode other than the recording/erasing mode, the playback analog signal applied to the input terminal 22 is relatively small compared to the analog signal applied to input terminal 22 during the recording/erasing mode, as shown in Fig. 9. Thus, during the mode other than the recording/erasing mode, the switch control signal SCS is maintained LOW, so that the analog switch 21 is switched to the position shown in Fig 3 to connect the terminals 21a and 21c. In this case, the mask signal generator 24 produces a LOW level signal to open the gate circuit 27 to permit the output signal from the comparator 25 to pass through the gate circuit 27.

Then, when the mode is changed to the recording/erasing mode, the analog signal applied to the input terminal 22 is several times greater than that applied during the mode other than the recording/erasing mode, as shown in Fig. 9. During the recording/erasing mode, the switch control signal SCS is made HIGH, so that the analog switch 21 is switched to connect the terminals 21b and 21c and, also so that the sample hold circuit holds the analog signal immediately preceding the switch control signal SCS changing to HIGH. Thus, the analog switch 21 continues to output a reasonable level analog signal during the mode other than the recording/erasing mode.

Although the signal output from the terminal 21c of the analog switch 21 is one from which excessively high level signals have been removed, the signal output still contains switching noise signals N1 and N2 generated when the analog switch 21 switches. The signals containing switching noise signals N1 and N2 is then compared with the output signal of the voltage generator 26 by the comparator 25 to produce a binary signal which is used as a digital signal. At this point the digital signal contains noise pulses P1 and P2 based on the switching noise signals N1 and N2. More specifically, noise signals N1 and N2 shown in Fig. 9 appear at the output of analog switch 21 in response to the leading edge and the trailing edge of the HIGH level switch control signal SCS. This results in unwanted noise pulses P1 and P2 produced by the comparator 25.

Here, even if a peak detection method, or the like, is used in place of a method using the comparator 25 and the voltage generator 26 to binary convert the analog signal to a digital signal, the digital signal can still contain noise pulses P1 and P2.

Furthermore, in response to the switch control signal SCS, the mask signal generator 24 produces a HIGH level mask signal which lasts longer than the HIGH level switch control signal SCS, by a time T1 as shown in Fig. 9. In other words, the mask signal generator 24 outputs a high mask signal when the switch control signal SCS is high and for the additional period T1 after the signal becomes low, i.e. for the period until time T1 has elapsed after the terminal connected to the terminal 21c of the analog switch 21 switches from the terminal 21a to the terminal 21b and then returns to terminal 21a again.

While the mask signal is high, the gate circuit 27 closes to prevent the signal output from the comparator 25 passing therethrough. Accordingly, noise pulses P1 and P2 are removed from the output signal of the gate circuit 27. Only appropriate digital signals are output from the gate circuit 27. Therefore, improper operation of digital signal processing circuits etc., as a result of switching noise signals N1 and N2 generated during switching of the analog switch 21 is easily avoided.

It is to be noted that according to a preferred embodiment of the present invention in which the output signal of the comparator 25 based on the mask signal output from the mask signal generator 24 is masked using a gate circuit 27, has been described. The present invention is not, however, limited to this embodiment. It is also impossible to prevent improper operation by, for example, stopping or resetting a digital signal processing circuit for the period in which switching noise signals N1 and N2 are generated by using a mask signal output from the mask signal generator 24 to control a digital signal processing circuit such as a demodulation circuit or PLL circuit (phase locked loop circuit) connected to the analog signal switching device 20.

Furthermore, a particularly significant effect is obtained when preventing the effects of signal noise generated when an analog switch is switched between signals to remove excessively high level playback analog signals in the aforementioned manner. The effect is not, however, limited to this, and a similar effect can also be obtained when switching between multiple input analog signals.

## Claims

1. A signal switching device for use in an optical memory device having an analog switch (21) which is selectively operable to connect one of a plurality of inputs (21a, 21b) thereof to a switch output (21c) thereof in accordance with the state of a switch control signal (SCS) **characterised in that** the signal switching device further comprises:
a mask signal generator (24) for generating a mask signal which is present during operation of the analog switch; and
gate means (27) responsive to the mask signal for connecting the switch output (21c) and a signal output of the device in the absence of the mask signal and inhibiting connection in the presence of the masking signal, whereby noise signals produced during operation of the analog switch can be substantially eliminated.

2. A signal switching device according to claim 1 wherein the signal switching device is operable for use in an optical memory device having a first recording/erasing mode and a second mode other than the recording/erasing mode, further comprising means (28) for generating the switch control signal, the switch control signal (SCS) having a first (HIGH) state providing the mask signal during the first mode and a second (LOW) state providing the absence of a masking signal during the second mode, and wherein the analog switch (21) connects the switch output (21c) with the input (21a) providing a first (direct) signal during the second (LOW) state of the switch control signal, and with the input (21b) providing a second (held) signal during the first (HIGH) state of the switch control signal.

3. A signal switching device according to claim 2 wherein the first (direct) signal is analog and further comprising sample hold circuit means (23) for holding the first (direct) signal during the second (LOW) state of the switch control signal (SCS) to provide the second (held) signal, and a digital signal generator (25, 26) for converting the signal at the switch output (21c) into a digital signal.

4. An analog signal switching device according to any one of claims 1 to 3 wherein said mask signal starts in response to the change in the state of said switch control signal and ends a predetermined time (T1) after the change in state of said switch control signal.

5. An analog signal switching device according to any one of claims 1 to 3 wherein the mask signal generator (24-1) comprises a multivibrator (41) for producing a pulse having a predetermined time width (T1) after the change from second to first state of said switch control signal (SCS).

6. An analog signal switching device according to any one of claims 1 to 4, wherein the mask signal generator (24-2) comprises a shift register (53) for shifting data a predetermined time (T1) after the change from the second to the first state of said switch control signal (SCS).

7. An analog signal switching device according to any one of claims 1 to 4, wherein said mask signal generator (24-3) comprises a counter (63) for counting a predetermined time (T1) after the change from the second to the first state of said switch control signal.

## Patentansprüche

1. Signalumschaltvorrichtung zur Verwendung in einem optischen Speichergerät mit einem Analogschalter (21), der einen aus einer Mehrzahl von Eingängen (21a, 21b) davon selektiv mit einem Schalterausgang (21c) davon gemäß dem Status eines Schaltersteuersignals (SCS) verbinden kann, *dadurch gekennzeichnet,* daß die Signalumschaltvorrichtung weiter umfaßt:
einen Maskensignalgenerator (24) zum Erzeugen eines Maskensignals, das während der Funktion des Analogschalters vorhanden ist; und
Gattereinrichtung (27), die auf das Maskensignal anspricht, zum Verbinden des Schalterausgangs (21c) und eines Signalausgangs der Vorrichtung bei Abwesenheit des Maskensignals und zum Trennen der Verbindung bei Anwesenheit des Maskensignats, wodurch Störsignale, die während der Funktion des Analogschalters erzeugt werden, im wesentlichen eliminiert werden können.

2. Signalumschaltvorrichtung nach Anspruch 1, in der die Signalumschaltvorrichtung zur Verwendung in einem optischen Speichergerät mit einer ersten Aufzeichnen/Löschen-Betriebsart und einer zweiten Betriebsart, die anders als die Aufzeichnen/Löschen-Betriebsart ist, betriebsfähig ist, weiter umfassend Einrichtung (28) zum Erzeugen des Schaltersteuersignals, wobei das Schaltersteuersignal (SCS) einen ersten (HOCH) Status, der das Maskensignal während der ersten Betriebsart bereitstellt, und einen zweiten (TIEF) Status, der die Abwesenheit des Maskensignats während der zweiten Betriebsart bereitstellt, hat, und worin der Analogschalter (21) den Schalterausgang 21c mit dem Eingang 21a, um ein erstes (direktes) Signal während des zweiten (TIEF) Statusses des Schaltersteuersignals bereitzustellen, und mit dem Eingang (21b) verbindet, um ein zweites (gehaltenes) Signal während des ersten (HOCH) Statusses des Schaltersteuersignals bereitzustellen.

3. Signalumschaltvorrichtung nach Anspruch 2, in der das erste (direkte) Signal analog ist und weiter umfassend Abtast- und Halteschaltungseinrichtung (23) zum Halten des ersten (direkten) Signals während des zweiten (TIEF) Statusses des Schaltersteuersignals (SCS), um das Zweite (gehaltene) Signal bereitzustellen, und einem Digital-Signal-generator (25, 26) zum Umwandeln des Signals am Schalterausgang (21c) in ein Digitalsignal.

4. Signalumschaltvorrichtung nach einem der Ansprüche 1 bis 3, in der das Maskensignal als Reaktion auf die Statusänderung des Schaltersteuersignals beginnt und eine vorgegebene Zeit (T1) nach der Statusänderung des Schaltersteuersignals endet.

5. Signalumschaltvorrichtung nach einem der Ansprüche 1 bis 3, in welcher der Maskensignalgenerator (24-1) einen Multivibrator (41) zum Erzeugen eines Impulses mit einer vorgegebenen Dauer (T1) nach der Änderung vom zweiten zum ersten Status des Schaltersteuersignals (SCS) umfaßt.

6. Signalumschaltvorrichtung nach einem der Ansprüche 1 bis 4, in welcher der Maskensignalgenerator (24-2) ein Schieberegister (53) zum Schieben von Daten einer vorgegebenen Zeit (T1) nach der Änderung vom zweiten zum ersten Status des Schaltersteuersignals (SCS) umfaßt.

7. Signalumschaltvorrichtung nach einem der Ansprüche 1 bis 4, in welcher der Maskensignalgenerator (24-3) einen Zähler (63) zum Zählen einer vorgegebenen Zeit (T1) nach der Änderung vom zweiten zum ersten Status des Schaltersteuersignals (SCS) umfaßt.

## Revendications

1. Dispositif de commutation de signaux à utiliser dans un dispositif de mémoire optique, comportant un commutateur analogique (21) qui est apte à fonctionner de façon sélective pour relier l'une parmi plusieurs de ses entrées (21a, 21b) à sa sortie de commutateur (21c) en fonction de l'état d'un signal de commande de commutateur (SCS), caractérisé en ce que le dispositif de commutation de signaux comprend en outre:
un générateur de signaux de masquage (24) pour générer un signal de masquage qui est présent pendant le fonctionnement du commutateur analogique; et
des moyens formant porte (27) sensibles au signal de masquage pour relier la sortie de commutateur (21c) et une sortie de signal du dispositif en l'absence du signal de masquage et pour interdire la connexion en la présence du signal de masquage, des signaux de bruit produits pendant le fonctionnement du commutateur analogique pouvant ainsi être sensiblement éliminés.

2. Dispositif de commutation de signaux selon la revendication 1, dans lequel le dispositif de commutation de signaux est apte à fonctionner en vue de son utilisation dans un dispositif de mémoire optique ayant un premier mode enregistrement/effacement et un second mode autre que le mode enregistrement/effacement, comprenant en outre des moyens (28) pour générer le signal de commande de commutateur, le signal de commande de commutateur (SCS) ayant un premier état (HAUT) fournissant le signal de masquage pendant le premier mode et un second état (BAS) fournissant l'absence d'un signal de masquage pendant le second mode, et dans lequel le commutateur analogique (21) relie la sortie de commutateur (21c) à l'entrée (21a) fournissant un premier signal (direct) pendant le second état (BAS) du signal de commande de commutateur, et à l'entrée (21b) fournissant un second signal (maintenu) pendant le premier état (HAUT) du signal de commande de commutateur.

3. Dispositif de commutation de signaux selon la revendication 2, dans lequel le premier signal (direct) est analogique et comprenant, en outre, des moyens formant circuit d'échantillonnage et de maintien (23) pour maintenir le premier signal (direct) pendant le second état (BAS) du signal de commande de commutateur (SCS) pour fournir le second signal (maintenu), et un générateur de signaux numériques (25, 26) pour convertir le signal au niveau de la sortie de commutateur (21c) en un signal numérique.

4. Dispositif de commutation de signaux analogiques selon l'une quelconque des revendications 1 à 3, dans lequel ledit signal de masquage commence en réponse au changement de l'état dudit signal de commande de commutateur et finit au bout d'une période prédéterminée (T1) après le changement d'état dudit signal de commande de commutateur.

5. Dispositif de commutation de signaux analogiques selon l'une quelconque des revendications 1 à 3, dans lequel le générateur de signaux de masquage (24-1) comprend un multivibrateur (41) pour produire une impulsion ayant une durée prédéterminée (T1) après le passage du second au premier état dudit signal de commande de commutateur (SCS).

6. Dispositif de commutation de signaux analogiques selon l'une quelconque des revendications 1 à 4, dans lequel le générateur de signaux de masquage (24-2) comprend un registre à décalage (53) pour décaler des données pendant une période prédéterminée (T1) après le passage du second au premier état dudit signal de commande de commutateur (SCS).

7. Dispositif de commutation de signaux analogiques selon l'une quelconque des revendications 1 à 4, dans lequel ledit générateur de signaux de masquage (24-3) comprend un compteur (63) pour compter une période prédéterminée (T1) après le passage du second au premier état dudit signal de commande de commutateur.
